# EUROPEAN PATENT SPECIFICATION

(11) **EP 2 165 876 B1**
(45) Date of publication and mention of the grant of the patent: **18.04.2012**
(21) Application number: 09275084.3
(22) Date of filing: 18.09.2009
(51) Int. Cl.: B60N 2/20, B60N 2/44, B60R 22/26

(54) **Vehicle seat**
Fahrzeugsitz
Siège de véhicule

(30) Priority: 18.09.2008 GB 0817081
(43) Date of publication of application: 24.03.2010
(73) Proprietor: Bentley Motors Limited, Crewe, Cheshire CW1 3PL (GB)
(72) Inventor: McManus, Steven, Warwick, Warwickshire (GB); Stapleton, Nicholas, Nantwich, Cheshire (GB); Sharman, Paul, Hinkley, Leicestershire (GB); Downie, Andrew, Sandbach, Cheshire (GB)
(74) Representative: Wilson Gunn

(56) References cited:
- EP-A- 0 215 220
- FR-A- 2 893 288
- FR-A- 2 916 392
- FR-A- 2 920 361

## Description

The present invention relates to a vehicle seat, and particularly although not exclusively an automotive vehicle seat, with an aperture through which a seat belt extends and a release handle enabling the seat to be moved to allow access behind the seat.

Front seats in two door motor vehicles are usually arranged so that they can be moved forwards to allow access to rear seats of the vehicle. Typically this involves tilting the seat squab forwards relative to the seat cushion into a so-called dumped position. Alternatively or additionally the seat cushion may slide forward. In each case forward movement of the seat is normally restrained by a latch which must be released to enable the seat to be moved forward. For this purpose a release handle is provided on the outside edge of the seat to enable it to be accessed from outside the vehicle.

Historically, release handles tend to have been mounted about mid-way up the side of the seat squab. However, it has been realised that this is not an ergonomically efficient position. It requires an operator to stoop to reach the handle and to use both hands to achieve movement of the seat: one to operate the handle and the other, placed behind the seat squab, to urge the seat forward. These ergonomic problems are exacerbated where the seat is heavy, and current trends in automotive seat design are resulting in the mass of seats increasing.

These problems can be addressed by positioning a release handle higher up the squab. This avoids an operator stooping and the operator's better posture coupled with the added leverage afforded by the higher handle position allows for one handed movement of the seat forward.

Another development in vehicle seat design is the provision of integrated seat belts where a reel of seat belt webbing is mounted on the seat and the webbing pays out of an aperture in the seat to form the shoulder strap of three point seatbelt. Seats with integrated seat belts are particularly advantageous for two door vehicles as the presence of a seat belt mounted on the vehicle does not impede access to the rear seats of the vehicle.

The position of seat belt anchorage points, and hence the position at which webbing of an integrated seat belt pays of out of the seat squab, are determined by the function of the seat belt and also by automotive regulations. Necessarily therefore the upper effective anchorage point of a seat belt is above a seat occupant's shoulder. So, for a seat with an integrated seat belt, seat belt webbing must pay out towards the top of the outside of the seat squab.

It will be appreciated, for the reasons discussed above, that it is desirable to position both a seat release handle and to pay out seat belt webbing at a similar location towards the top, outside edge of a seat squab.

DE A 2005 027 074 discloses a vehicle seat where the seat belt runs through an aperture in the seat back. A release handle is positioned along the inside surface of the aperture closest to the vehicle door. An operator may pivot the handle outwards from the seat around a vertical axis to release the seat squab and allow it to move.

DE A 103 41405 discloses a vehicle seat where the seat belt runs through an aperture in the seat back. An electrical seat release switch is positioned on the top inside surface of the aperture. On actuation, the switch sends an electrical signal to an unlocking mechanism which enables the user to move the seat.

The proximity of the seat belt to the seat release handle creates packaging problems, it being important that neither component interferes with the operation of the other, and it is an object of embodiments of the present invention to overcome, or at least mitigate, these problems.

According to the present invention there is provided a vehicle seat comprising a squab, a seat release handle mounted on the squab and an aperture in the squab through which a seat belt may pay out wherein the seat release handle extends over the intended path of a seat belt payed out from the aperture, characterised in that one end of the release handle is pivotally mounted on the seat release handle to one side of the intended path of the seat belt, and the opposite end of the seat release handle comprises an arcuate member which is slidably received into a guide means disposed on the seat squab on the opposite side of the intended path of the seat belt.

Arranging for the seat release handle to extend over the intended path of the seat belt enables the seat vehicle handle to be positioned in generally the same location on the seat squab as a seat belt but without interfering with the operation of the seat belt.

Preferably the seat is provided with a seat belt, which may comprise webbing, which extends out of the aperture and under the seat release handle.

The seat release handle is preferably operable between a normal position and an open position in which the seat may be moved to allow access behind the seat. Movement of the seat release handle from the normal to open position preferably causes the handle to move away from the intended path of the seat belt.

The seat handle preferably includes a guard arranged to lie between an operator of the handle's hand and the intended path of the seat belt. The seat release handle may be a loop handle.

Seat belt webbing may run directly beneath the handle, and any guard incorporated with the handle. That is to say, there need be no other structure between the webbing and handle.

In order that the present invention may be more clearly understood an embodiment thereof will now be described by way of example with reference to the accompanying drawings of which:
Figure 1 : is a partial rear quarter view of a vehicle seat according to the invention;
Figure 2 : is a partial front view of the seat of Figure 1;
Figure 3 : is a cross-section through the squab release handle assembly of the seat of Figure 1 in a closed position;
Figure 4 : is a view corresponding to Figure 3 but with the handle in an open position;
Figure 5 : is a cross-sectional view taken along the line A-A of Figure 3; and
Figure 6 : is an exploded view of the squab release handle assembly.

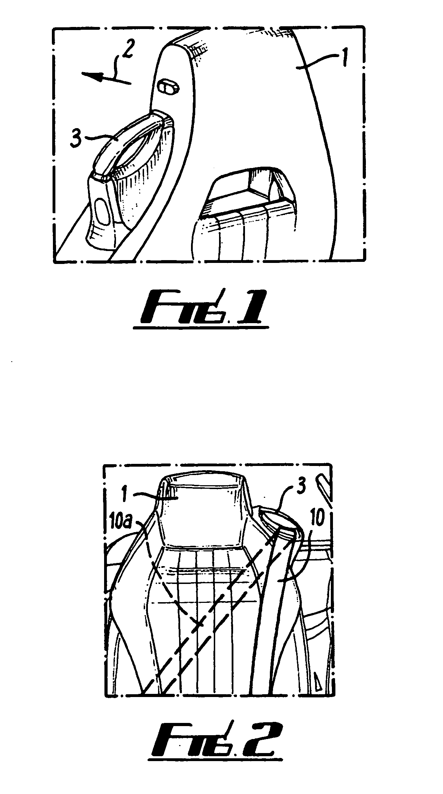

Referring to the drawings an automotive vehicle seat comprises a squab 1 (or seat back). The squab 1 is arranged so that it can be tilted forwards in a direction indicated by arrow 2 in Figure 1 with respect to a cushion (not shown) into a so-called dumped position to allow access to the rear seats of a two door vehicle. This is common for front seats for two door vehicles. As is also common, the squab 1 is normally retained relative to the cushion by a latch which is released by a squab release handle when it is desired to move the squab to the dumped position.

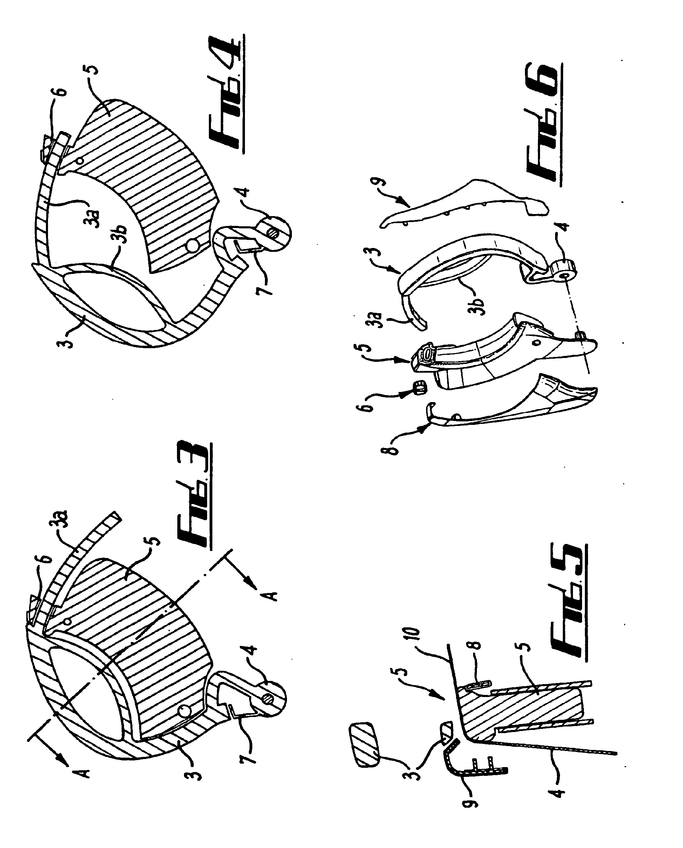

A squab release handle assembly comprising a squab release handle 3 is mounted towards the top of the outside of the seat squab 1. The handle comprises a generally U-shaped member. At one end the member is pivotally mounted to a cast base piece 5 mounted to the squab 1. The opposite end of the handle 3 forms an arcuate guide member 3a which is received into a Nyton (RTM) or other suitable material guide piece 6 received into the base piece 5. The handle 3 may be pivoted between a normal position shown in Figure 3, against the action of a return spring 7, to an open position shown in Figure 4. When the handle 3 is in the open position the seat squab 1 is unlocked with respect to the seat cushion and may be moved between normal and dumped positions. As the handle 3 is engaged with the base casting 5 at each of its opposite ends to provide a secure mounting to the squab, it may be used to move the squab between normal and dumped positions with one hand. The handle 3 further comprises a guard 3b which, together with part of the remainder of the handle, forms a loop.

The handle assembly also comprises front 8 and rear 9 moulded covers. These attach to and conceal the base casting 5 and may be trimmed to match or compliment the seat squab. The rear cover 9 is arranged to define a slot between the cover and the base casting 5, through which seat belt webbing 10 pays out to form a shoulder strap of an integrated seat belt.

The seat belt webbing extends from a conventional inertia-type reel mounted inside the seat squab 1 to a lower anchorage point on the rear of the seat cushion. When the seat is not occupied the webbing lies generally as shown in Figure 2. When the seat is occupied the seat belt is drawn across the occupant and a buckle on the belt attached to an anchorage on the opposite side of the seat cushion. The webbing will then extend generally as shown by broken lines 10a in Figure 2. In normal use therefore the seat belt webbing extends over the base casting 5, which forms an effective upper anchorage point for the seat belt which is therefore clear of the seat release handle 3.

Further, on operation of the handle a user's hand is effectively isolated from the webbing by the guard 3a.

A seat according to the present invention combines the advantages of an integrated seat belt with those of a high mounted seat release handle. Although the handle and seat belt occupy a similar position of the seat squab under normal operation they do not interfere with each other.

The above embodiment is described by way of example only. Many variations are possible without departing from the invention, according to claims 1 to 7.

## Claims

1. A vehicle seat comprising a squab (1), a seat release handle (3) mounted on the squab and an aperture in the squab through which a seat belt (10) may pay out wherein the seat release handle (3) extends over the intended path of a seat belt (10) payed out from the aperture, **characterised in that** one end of the seat release handle (3) is pivotally mounted on the seat squab (1) to one side of the intended path of the seat belt and the opposite end of the seat release handle (3) comprises an arcuate member (3a) which is slidably received into a guide means (6) disposed on the seat squab (1) on the opposite side of the intended path of the seat belt (10).

2. A vehicle seat as claimed in claim 1, the seat further comprising a seat belt (10) which extends out of the aperture and under the seat release handle (3).

3. A vehicle seat as claimed in any preceding claim wherein the seat release handle (3) is operable between a normal position and an open position in which the seat may be moved to allow access behind the seat.

4. A vehicle seat as claimed in claim 3 wherein movement of the seat release handle (3) from the normal to open position causes the handle to move away from the intended path of the seat belt (10).

5. A vehicle seat as claimed in any preceding claim wherein the seat release handle (3) includes a guard (3b) arranged to lie between an operator of the handle's hand and the intended path of the seat belt.

6. A vehicle seat as claimed in any preceding claim wherein the seat release handle is a loop handle.

7. A vehicle seat as claimed in claim 2 and any of claims 3 to 6 when dependent, directly or indirectly, on claim 2 wherein the seat belt runs directly beneath the handle.

## Patentansprüche

1. Fahrzeugsitz, umfassend eine Rücklehne (1), einen Sitzentriegelungsgriff (3), der an der Rücklehne montiert ist, und eine Öffnung in der Rücklehne, durch die ein Sicherheitsgurt (10) abrollen kann, wobei der Sitzentriegelungsgriff (3) über dem vorgesehenen Weg eines Sicherheitsgurts (10) verläuft, der aus der Öffnung abgerollt ist, **dadurch gekennzeichnet, dass** ein Ende des Sitzentriegelungsgriffs (3) schwenkbar an der Sitzrücklehne (1) auf einer Seite des vorgesehenen Wegs des Sicherheitsgurts montiert ist und das gegenüberliegende Ende des Sitzentriegelungsgriffs (3) ein gebogenes Element (3a) umfasst, das verschiebbar in einem Führungsmittel (6) aufgenommen ist, das an der Sitzrücklehne (1) auf der gegenüberliegenden Seite des vorgesehenen Wegs des Sicherheitsgurts (10) angeordnet ist.

2. Fahrzeugsitz nach Anspruch 1, wobei der Sitz ferner einen Sicherheitsgurt (10) umfasst, der aus der Öffnung heraus und unter dem Sitzentriegelungsgriff (3) verläuft.

3. Fahrzeugsitz nach einem vorhergehenden Anspruch, wobei der Sitzentriegelungsgriff (3) zwischen einer normalen Stellung und einer offenen Stellung, in der der Sitz bewegt werden kann, damit man hinter den Sitz gelangen kann, betätigt werden kann.

4. Fahrzeugsitz nach Anspruch 3, wobei eine Bewegung des Sitzentriegelungsgriffs (3) aus der normalen in die offene Stellung bewirkt, dass der Griff sich von dem vorgesehenen Weg des Sicherheitsgurts (10) weg bewegt.

5. Fahrzeugsitz nach einem vorhergehenden Anspruch, wobei der Sitzentriegelungsgriff (3) einen Schutz (3b) aufweist, der angeordnet ist, um zwischen einer Hand des Bedienenden des Griffs und dem vorgesehenen Weg des Sicherheitsgurts zu liegen.

6. Fahrzeugsitz nach einem vorhergehenden Anspruch, wobei der Sitzentriegelungsgriff ein Schlaufengriff ist.

7. Fahrzeugsitz nach Anspruch 2 und einem der Ansprüche 3 bis 6, wenn sie, direkt oder indirekt, von Anspruch 2 abhängen, wobei der Sicherheitsgurt direkt unter dem Griff verläuft.

## Revendications

1. Siège de véhicule comprenant un dossier (1), une poignée de déblocage de siège (3) montée sur le dossier et une ouverture dans le dossier à travers laquelle une ceinture de sécurité (10) peut se glisser, dans lequel la poignée de déblocage de siège (3) s'étend sur le chemin prévu d'une ceinture de sécurité (10) qui se glisse par l'ouverture, **caractérisé en ce qu'**une extrémité de la poignée de déblocage de siège (3) est montée de manière pivotante sur le dossier de siège (1) sur un côté du chemin prévu de la ceinture de sécurité et l'extrémité opposée de la poignée de déblocage de siège (3) comprend un élément arqué (3a) qui est reçu de manière coulissante dans un moyen de guidage (6) disposé sur le dossier de siège (1) sur le côté opposé du chemin prévu de la ceinture de sécurité (10).

2. Siège de véhicule selon la revendication 1, le siège comprenant en outre une ceinture de sécurité (10) qui s'étend hors de l'ouverture et sous la poignée de déblocage de siège (3).

3. Siège de véhicule selon l'une quelconque des revendications précédentes, dans lequel la poignée de déblocage de siège (3) est fonctionnelle entre une position normale et une position ouverte dans laquelle le siège peut être déplacé de façon à permettre un accès derrière le siège.

4. Siège de véhicule selon la revendication 3, dans lequel un déplacement de la poignée de déblocage de siège (3) à partir de la position normale vers la position ouverte provoque l'éloignement de la poignée du chemin prévu de la ceinture de sécurité (10).

5. Siège de véhicule selon l'une quelconque des revendications précédentes, dans lequel la poignée de déblocage de siège (3) comprend une protection (3b) agencée de façon à se situer entre la main d'un opérateur de la poignée et le chemin prévu de la ceinture de sécurité.

6. Siège de véhicule selon l'une quelconque des revendications précédentes, dans lequel la poignée de déblocage de siège est une poignée en boucle.

7. Siège de véhicule selon la revendication 2 et selon l'une quelconque des revendications 3 à 6 si elle dépend, de manière directe ou indirecte, de la revendication 2, dans lequel la ceinture de sécurité passe directement sous la poignée.
